# EUROPEAN PATENT SPECIFICATION

(11) **EP 2 844 075 B1**
(45) Date of publication and mention of the grant of the patent: **08.06.2016**
(21) Application number: 13719731.5
(22) Date of filing: 17.04.2013
(51) Int. Cl.: A23G 1/18, A23G 1/20, A23G 3/22

(54) **A DISTRIBUTION NOZZLE FOR DISTRIBUTING PRODUCTS OF A FLUID NATURE**
VERTEILERDÜSE FÜR DIE VERTEILUNG FLIESSFÄHIGER PRODUKTE
BUSE À DISTRIBUTION POUR LA DISTRIBUTION DES PRODUITS FLUIDES

(30) Priority: 03.05.2012 IT MI20120735
(43) Date of publication of application: 11.03.2015
(73) Proprietor: BRAVO S.p.A., 36075 Montecchio Maggiore (Vicenza) (IT)
(72) Inventor: BRAVO, Genesio, I-36050 Sovizzo - Vicenza (IT)
(74) Representative: Martegani, Franco
(86) International application number: PCT/EP2013/001201
(87) International publication number: WO 2013/164074

(56) References cited:
- GB-A- 945 030
- US-A- 5 403 396
- US-A- 5 437 723
- US-B1- 6 348 105

## Description

The present invention relates to a perfected distribution nozzle for supplying products of a fluid nature.

In particular, the invention in question is advantageously used in machines for the processing of food products, such as, for example, chocolate tempering machines suitable for coating food products with chocolate or similar products, to which the following description will make explicit reference, at the same time maintaining its generic characteristics.

In the food processing field, the use is known of a chocolate tempering machine, such as that described, for example, in Italian patent applications MI2011A001039 filed on June 9, 2011 and MI2011A001164 filed on June 27, 2011 in the name of the same Applicant, said machine comprising a tank containing the chocolate under processing, and which is connected, through an outflow tube to a pump, normally of the worm-conveyor type. The above-mentioned pump is in turn connected to a fountain tube terminating with a distribution spout of the chocolate above the same tank.

With the use of this tempering machine, the chocolate is normally first dissolved in the tank (at a temperature ranging from 40°C to 55°C), then rapidly cooled in the worm-conveyor pump (at a variable temperature according to the type of chocolate being processed) and finally maintained at a pre-selected temperature (so-called crystallization temperature) for an indefinite time: the chocolate leaving the distribution spout, if not used, is collected by free fall in an underlying collection tank to be recycled.

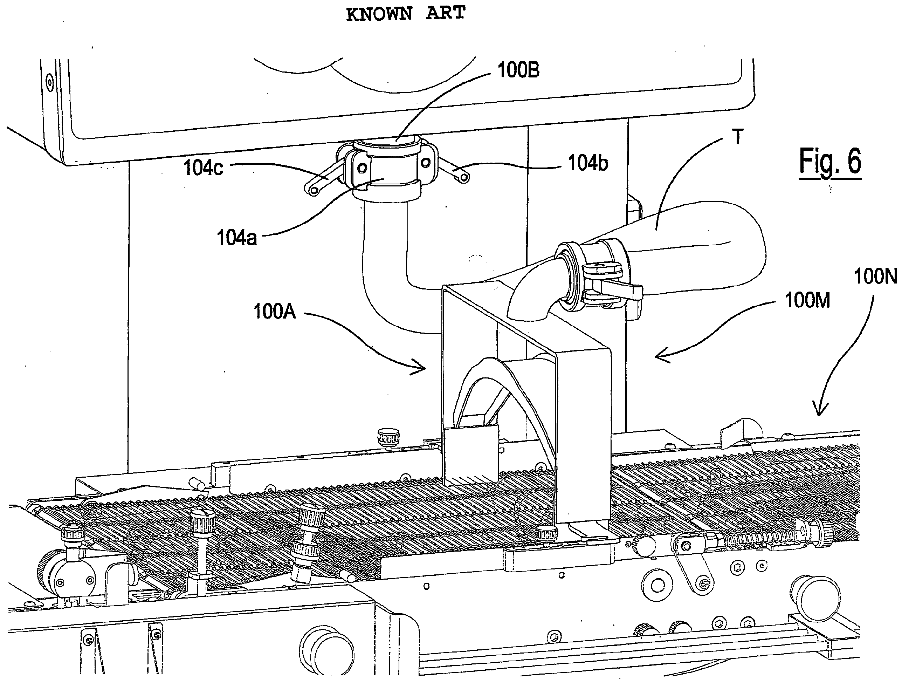

In general, in the tempering machines disclosed by the two above-mentioned Italian patent applications, of which a detail is also illustrated in the enclosed figure 6, the distribution spout is not situated centrally with respect to the underlying container, but is curved and decentralized towards the edge of the container itself, facing the inside of the machine, in order to allow the operator to work more easily, thus preventing him, as much as is possible, from putting his hands or tools under the flow of chocolate exiting from the distribution spout.

At present, if the tempering machines of the type described above are equipped with coating belts and use dosing boxes or dosing arcs to allow the total coating of the food products, an end or tubular extension of the flexible or rigid type is also connected to the distribution spout, connected to the dosing arc and suitable for allowing the chocolate to fall onto the dosing arc itself.

These flexible extensions require a double connection and their coupling/decoupling is therefore difficult and complex if the type of arc is to be changed, or if the use of the coating belts is stopped, whereas extensions of the rigid type must be disassembled when the type of arc has to be varied.

The document GB 945 030 discloses a distribution nozzle with a curved section, and a tapered end, which is connected to a tempering unit, and which is connected to the pipe arriving form the tempering unit via a connection.

The document US 5,403,396 discloses articulated joints, which allow for a rotational movement.

An objective of the present invention is to overcome the problems of the known art described above.

In particular, an objective of the present invention is to provide a distribution nozzle which can be rapidly and conveniently coupled/decoupled with a spout of a tempering machine, and which can be easily oriented with respect to the components of the tempering machine itself.

This objective is achieved by a distribution nozzle having the characteristics described in the enclosed main claim and in the relative dependent claims.

The structural and functional characteristics of the present invention and its advantages with respect to the known art will appear more evident from the following description, referring to the enclosed drawings, which show some non-limiting embodiment examples of the invention. In the drawings:
- figures 1a, 1b and 1c represent a preferred embodiment of the distribution nozzle in question, in respective side views and partially sectional, front and perspective views;
- figure 2 represents a detail on an enlarged scale, of a spout on which the distribution nozzle in question is suitable for being inserted;
- figures 3, 4 and 5 represent respective perspective views of a tempering machine equipped with the distribution nozzle in question; and
- figure 6 illustrates a perspective view of a distribution nozzle of a tempering machine of the known art.

With reference to the enclosed figures from 1a to 1c and from 2 to 5, 1 indicates a distribution nozzle assembled on an outlet spout B of chocolate forming part of a tempering machine M of the known type and suitable for coating food products (known and not illustrated) with chocolate, fed by a conveyor belt N through a collection container C situated beneath the distributor 1, and the same belt N.

A doser A of the chocolate is also an integrant part of the machine M, positioned beneath the distributor 1, connected to the distributor 1 itself, and above the belt N for distributing chocolate onto the food products advancing on the same belt N.

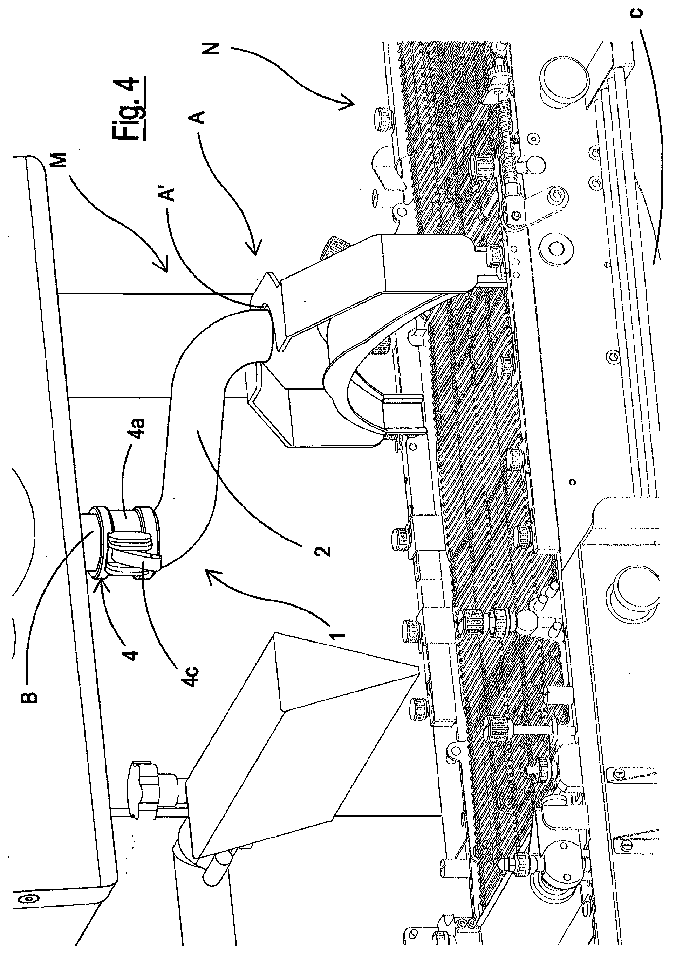

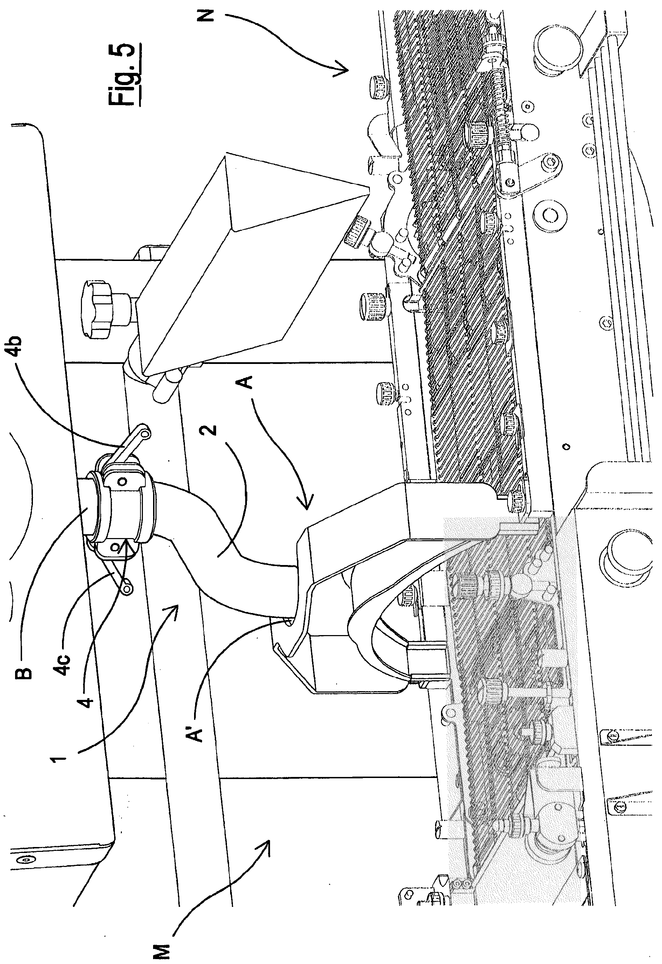

The distributor A is generally defined, in a known way, by a dosing arc (figures 4 and 5) or by a dosing box (not illustrated).

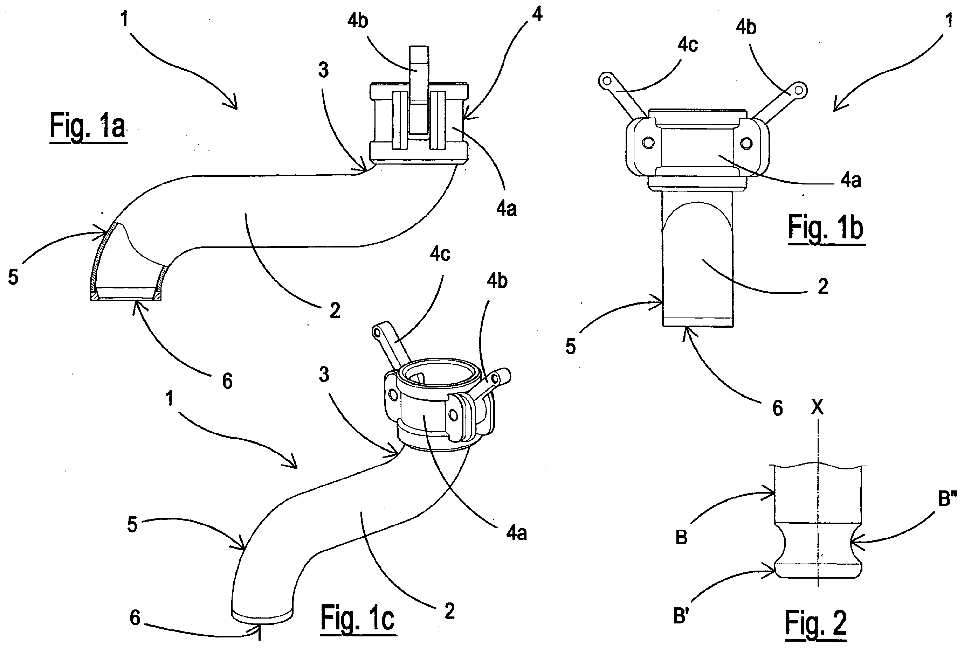

The nozzle 1 comprises a tubular element 2 essentially "S"-shaped, equipped, at one of its curved ends 3, with a fast-release connection 4, and suitable, when in use, for being inserted on the distribution spout B, in correspondence with an end B' of the same spout B provided with a semicircular groove B" (figure 2).

The semicircular groove B" has the particular feature of allowing the rapid connection 4 of the element 2, once inserted on the spout B, to easily rotate on itself around a vertical axis X.

According to what is illustrated in figures 1a to 1c, the connection 4 comprises a fixing clamp 4a provided with a pair of opposite levers 4b and 4c, suitable, when in use, for being lowered onto the connection 4 in order to block the connection 4 on the spout B.

At the opposite side with respect to the end 3, the tubular element 2 has a curved portion 5 with an outlet 6 suitably tapered and therefore with a narrowing of its circular outlet diameter.

Said tapered outlet 6 allows the flow of chocolate to be calibrated at the outlet of the distributor 1, so as to completely cover the same outlet 6. In this way, when in use, said tapered outlet 6 is able to avoid so-called "channel movements", i.e. a nozzle 1 not completely filled with chocolate.

This allows the flow of chocolate leaving the distributor 1 to fall perfectly at the centre of the doser A to guarantee a uniform distribution of the chocolate and therefore a correct coating of the food products positioned on the belt N.

The doser A is suitably equipped with an opening A' at its top, which acts as a centring seat for the outlet 6 of the distributor 1.

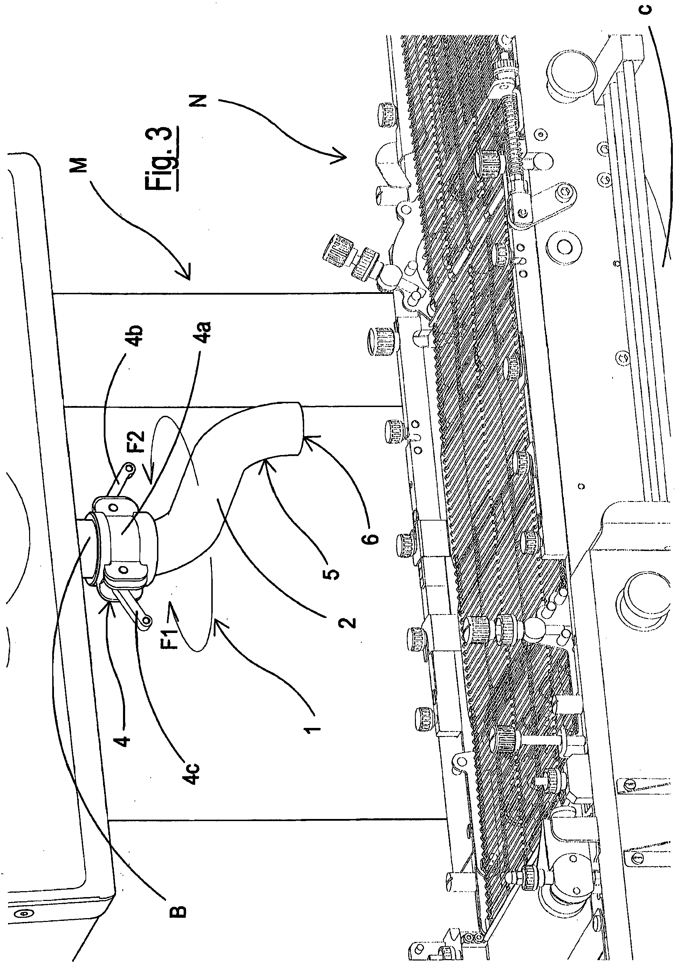

From the above description, it can be noted how the removal or movement operations of the doser A are completely simplified, as it is sufficient to rotate the distributor 1 towards the right or left (arrows F1 and F2 in figure 3), so that the flow of chocolate no longer feeds the doser A.

In this way the chocolate is in any case made to fall into the collection container C, consequently the cycle for keeping the chocolate at the processing temperature is not interrupted, and the system selected for the coating can be easily and rapidly removed, with no risk of fouling.

The distributor 1 can therefore be easily removed from the spout B, by simply releasing the rapid connection 4 described above by acting on the levers 4a and 4b, thus also facilitating cleaning operations, as it is smaller and can be more easily inspected, with respect to a flexible tube or rigid curved T-tube, as shown in the tempering machine of the known art illustrated in figure 6. In figure 6, the same components and/or substantially corresponding to those illustrated in figures 1-5 are indicated with the same reference numbers with the addition of 100.

The objective mentioned in the preamble of the description has therefore been achieved.
The protection scope of the invention is defined by the following claims.

## Claims

1. A distribution nozzle (1), in particular suitable for being inserted on a spout (B) of a tempering machine (M), **characterized in that** it comprises a tubular element (2) provided at one of its curved ends (3) with a rapid-release connection (4) with said spout (B), and at the opposite end (5) with a tapered outlet mouth (6) having a reduced diameter; said rapid-release connection (4) being suitable for allowing said tubular element (2) to rotate around a substantially vertical axis (X).

2. The distribution nozzle according to claim 1, **characterized in that** said rapid-release connection (4) comprises clamp means (4a) for fixing said tubular element (2) to said spout (B), and fixing lever means (4b, 4c) assembled on said clamp means (4a).

3. The distribution nozzle according to claim 1 or 2, **characterized in that** said spout (B) comprises an end (B') having a substantially semicircular cavity (B") suitable for coming into contact with said rapid-release connection (4).

4. The distribution nozzle according to any of the claims from 1 to 3, **characterized in that** said outlet mouth (6) is suitable for being coupled with a seat (A') of dosing means (A) of said tempering machine (M).

## Patentansprüche

1. Verteilungsdüse (1), die insbesondere zum Einsetzen in einen Abfluss (B) einer Tempermaschine (M) geeignet ist, **dadurch gekennzeichnet, dass** sie ein Rohrelement (2) umfasst, das an einem seiner gekrümmten Enden (3) mit einer Schnellwechslerverbindung (4) mit dem Abfluss (B) und an dem gegenüberliegenden Ende (5) mit einer verjüngten Auslassmündung (6) versehen ist, die einen reduzierten Durchmesser aufweist; wobei die Schnellwechslerverbindung (4) dazu geeignet ist, eine Drehung des Rohrelements (2) um eine im Wesentlichen vertikale Achse (X) zuzulassen.

2. Verteilungsdüse nach Anspruch 1, **dadurch gekennzeichnet, dass** die Schnellwechslerverbindung (4) ein Klemmmittel (4a) zum Fixieren des Rohrelements (2) an dem Abfluss (B) und ein Fixierhebelmittel (4b, 4c), das an dem Klemmmittel (4a) angebaut ist, umfasst.

3. Verteilungsdüse nach einem der Ansprüche 1 oder 2, **dadurch gekennzeichnet, dass** der Abfluss (B) ein Ende (B') mit einem im Wesentlichen halbkreisförmigen Hohlraum (B") umfasst, der dazu geeignet ist, mit der Schnellwechslerverbindung (4) in Kontakt zu kommen.

4. Verteilungsdüse nach einem der Ansprüche 1 bis 3, **dadurch gekennzeichnet, dass** die Auslassmündung (6) zur Kopplung mit einem Sitz (A') eines Dosiermittels (A) der Tempermaschine (M) geeignet ist.

## Revendications

1. Buse de distribution (1), en particulier adaptée pour être insérée sur un canal de coulée (B) d'une machine à tremper (M), **caractérisée en ce qu'**elle comprend un élément tubulaire (2) doté, à une de ses extrémités incurvées (3), d'un raccord à libération rapide (4) avec ledit canal de coulée (B) et, à son extrémité opposée (5), d'un orifice de sortie conique (6) ayant un diamètre réduit; ledit raccord à libération rapide (4) étant adapté pour permettre audit élément tubulaire (2) de tourner autour d'un axe (X) sensiblement vertical.

2. Buse de distribution selon la revendication 1, **caractérisée en ce que** ledit raccord à libération rapide (4) comprend un moyen de serrage (4a) pour fixer ledit élément tubulaire (2) audit canal de coulée (B), et fixer un moyen formant levier (4b, 4c) assemblé sur ledit moyen de serrage (4a).

3. Buse de distribution selon la revendication 1 ou 2, **caractérisée en ce que** ledit canal de coulée (B) comporte une extrémité (B') ayant une cavité (B") sensiblement semi-circulaire, adaptée pour entrer en contact avec ledit raccord à libération rapide (4).

4. Buse de distribution selon l'une quelconque des revendications 1 à 3, **caractérisée en ce que** ledit orifice de sortie (6) est adapté pour être couplé à un siège (A') d'un moyen de dosage (A) de ladite machine à tremper (M).
